Europäisches Patentamt

European Patent Office

Office européen des brevets

(11) Publication number: **0 108 242**
**B1**

# EUROPEAN PATENT SPECIFICATION

(45) Date of publication of patent specification: **19.04.89**

(51) Int. Cl.⁴: **B 01 D 15/08**

(21) Application number: **83109759.7**

(22) Date of filing: **29.09.83**

(54) Column for liquid chromatography.

(30) Priority: **01.10.82 PL 238461**

(43) Date of publication of application:
**16.05.84 Bulletin 84/20**

(45) Publication of the grant of the patent:
**19.04.89 Bulletin 89/16**

(84) Designated Contracting States:
**CH DE FR GB IT LI SE**

(56) References cited:
**CH-A- 509 591**
**DE-A-1 673 114**
**DE-A-3 000 475**

(73) Proprietor: **POLITECHNIKA GDANSKA**
**ul. Majakowskiego 11/12**
**PL-80-952 Gdansk (PL)**

(72) Inventor: **Kowalczyk, Jerzy**
**ul. Kruczkowskiego 23B/8**
**Gdansk (PL)**
Inventor: **Kaminski, Marian**
**ul. Burzynskiego 8F/5**
**Gdansk-Zaspa (PL)**
Inventor: **Klawiter, Jan**
**ul. Wybickiego 10**
**Gdynia-Rumia (PL)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Description

The subject of the present invention is a column for liquid chromatography, especially for preparative chromatography.

The chromatographic column known hitherto from the catalogue of the Knauer company D/CHROM/EXP/11/78— consists of a cylindrical body and two identical fixed heads mounted on the inlet and the outlet of the column. The heads rest on protrusions inside the body and are sealed with tephlon ® rings, each head being provided with a central conduit situated on the axis of symmetry thereof, a mobile phase distributor and two stainless steel nets between which there are three filters of glass fibre. The outlet of the central conduit is situated above the mobile phase distributor made of thin plate with a cut-out in a form of a six-pointed star, situated on the axis of symmetry of the head. The mobile phase distributor, steel nets and glass fibre filters are in the form of discs.

The main inconvenience of the above described column is that the heads are immovable. In the top head, the filters of glass fibre are not sealed and the flow of the mobile phase can pass them by sideways to a considerable degree and, thus, cause a decrease of the efficiency of the column. Moreover, the said filters are not durable and they can be damaged in the lower head at very high flow rates, which, in turn, can lead to destruction of the structure of the packing, caused by washing out grains from the column, and this hinders further operation thereof.

Besides, glass fibre filters do not aid the mobile phase distributor in the process of uniform distribution of dosed substance and eluate for the reason of the fact that the specific resistance of the filters is bigger than the specific resistance of the column packing. In this state of affairs distribution takes place in the neighbourhood of the cut-out in the form of a six-pointed star, which considerably lowers efficiency of the column and the degree of utilization of the active surface of the packing.

As known from the catalogue of the Pharmacia company — Technical Date Sheet no. 10 — the classical chromatographic column has two fixed heads mounted on the inlet and the outlet of the column, sealed with "0" type rings of chemoresistant rubber. The upper head is provided with a tubular capillary whose outlet is situated above a disc of thick net functioning as the mobile phase distributor. Under this net is disposed a thin nylon net and an annular lock washer functioning additionally as a scraper.

Said column is suitable for low pressures. One of the designs of the said column enables pressing the lower head onto the layer of the packing, which may settle, by means of a screw.

In the column of this company the role of the distributor is performed by a thick net, whereas a thin net performs the role of sinter, that is prevents the outflow of packing grains from the column. The intended application of the column determines the mesh size of the thin net. Therefore, it cannot be applied for packings having the grain size smaller than the mesh size of the net. The problem of sealing the polyamide net is similar to that with the Knauer apparatus. With effective packings the feeding of the mobile phase through one inlet additionally aggravates the efficiency of the column. One central hole makes it impossible to distribute uniformly the dosed substance over the whole surface of the packing. This is a substantial drawback as the diameter of the column increases.

A sectional chromatographic column is known from the catalogue of the Pharmacia Fine Chemicals. Each section of this column consists of a cylindrical body and two identical fixed heads mounted on the inlet and the outlet of the body. The head has two inserts with six holes arranged on the perimeter, a supporting disc in the form of a thin net, a polyamide net and a gasket, whereby the diameter of holes in the first insert is smaller than the diameter of holes in the second insert, and the holes in both inserts are in line with each other. The mobile phase distributor in this column is a collector with six tubes, whereas the supporting disc functions additionally as a distributor.

In said column, taking into account the considerable dispersion of the material in the space of the tubes and collectors, as well as in the space of the inlet—and outlet heads of the individual sections, the efficiency of the degree of distribution of the dosed substance is decidedly worse, which causes very diffuse boundaries of the zones of the dosed substance in regions beyond the porous layer of the column packing.

A non-typical solution is the chromatographic column of the Iobin-Yvonne company, having the length of 1 metre, which has a fixed upper head provided with a mobile phase distributor in a form of a disc with 8 holes situated on the perimeter and a central hole, a porous plate of sinter, pressed into the body of the mobile phase distributor, and a lower head in a form of a pneumatic piston shifted in the body of the column by means of gas compressed to the pressure of 10.1 bar (10 atm). The piston is, provided with a porous plate of sinter, whereby between the upper surface of the piston and the plate there is a free space functioning as a mobile phase distributor.

Porous plates of sinter in both heads adjoin the column packing.

In the column of the Iobin-Yvonne company filters of sintered powder are sealed in a press-in manner, which does not ensure good tightness on the whole perimeter. In case of the filter being clogged, it cannot be removed without destruction, and repeated and a leakfree reinstallation of the new filter is very difficult. The fixed upper head does not enable compensation of gas pockets which can appear in the course of operation of the column. The lower head also does not enable compensation of the wear caused by the layer of the packing against walls of the column. The maximum pressure of the operation of the column is limited and equal or smaller than the pressure of the piston on the layer of the packing. The length of the central passage in the upper head is smaller than the length of passages feeding the mobile phase to holes on the perimeter. Thus, resistances to flow of the mobile phase are different and zones of the dosed substance are deformed, which considerably lowers efficiency of separation.

A further chromatographic column is known from CH-A-509 591 which comprises slidable heads provided with gaskets, the supply and drain conduit of mobile phase, and a small porous sinter at the lower head. This device has the disadvantage that the heads may be forced out of the column at a relatively low over pressure. Further, the porous sinter at the lower head is inconveniently fixed by oppressing and therefore has the same disadvantages as the device manufactured by Jobin Yvon. Furthermore, the distribution of the mobile phase in the cross-sectional part of the column does not occur satisfactorily. The structure as suggested will result in strong broadening of the substance zone on the inlet and outlet of the column. Thus, it is difficult to find application for this device in high pressure liquid chromatography of high efficiency.

The object of the present invention is to ensure uniform distribution and receiving of the mobile phase and dosed substances in the whole cross-section of the column, with in a wide range of diameters thereof.

The object of the invention is to design a chromatographic column eliminating inconveniences of the hitherto know columns and fulfilling the aforesaid conditions.

According to the invention the column for liquid chromatography including a cylindrical body and movable heads mounted on the inlet and outlet of the column; each head including a filter plate of porous sinter mounted therein and having a protrusion on the outer surface thereof, at least one gasket being disposed between said protrusion and a sleeve provided over the outer surface of the head; and a central conduit located in each head, adjacent to said filter plate and forming the inlet or outlet of said column, characterized in that a spacer, a mobile phase distributor and a ring with a net disposed therein are mounted in succession in each head between one end of the central conduit and the filter plate of porous sinter, said filter plate abutting the face of the ring and sealed in the head by a gasket, said gasket being pressed to the head and to the filter plate by a hold-down nut, and each of the heads is adjusted slidably with respect to the body of the column by means of a nut.

The distributor for the mobile phase is in a form of a plate provided with radial grooves branching out at an angle of 60° from the center thereof and reaching a common collector in a form of a groove, and with 18 ports whereof 6 are disposed between radial grooves and the collector at the same distance from one another, whereas the other 12 ports are disposed outside the collector, whereas each of the ports situated between radial grooves and each 2 ports situated outside the collector are connected with the collector by grooves of the same length in a common point which is situated at half the distance between radial groves.

Between the plate and the ring with a net there is a second plate having 54 ports arranged on nodes of a rhomboidal lattice with an acute angle of the order of 60°, each 3 of which are coupled by means of grooves of the same length in common points situated on two circles, wheras the second plate is so disposed in relation to the first plate that 6 common points arranged on the inner circle are in line with ports disposed between radial grooves in the first plate, whereas the other common points arranged on the outer circle of the second plate are in line with ports situated outside the collector in the first plate. The hold-down nut has a circumferential groove in which a scraper ring is situated.

Unexpectedly it has been found, and this has been confirmed by the research which undoubtedly represents a scientific achievement and an original creative contribution, that the minimum diffusion of zones and, thus, the maximum efficiency of the column is attained in case when the total area of the cross-section of radial grooves is equal to the area of the cross-section of the collector, which, in turn, is equal to the total area of the cross-section of all grooves connecting every three ports, and at the same time is about two times bigger than the area of the cross-section of the central conduit.

Advantages of the column according to the invention consist in ensuring a uniform supply of the whole surface of the column packing and proportioning of the examined substance in the form of a flat and narrow zone even in columns of a very big diameter, the possibility of pressing down both heads to the column packing and moving them as the packing settles, as well as achieving a relatively good permeability of the column at its practical independence of the flow rate of the mobile phase.

Moreover, the column has good tightness in case of applying high pressures, even of the order of above 10.O MPa, and the scraper ring placed in the circumferential groove of the hold-down nut additionally cleans the inner surface of the body of the column during installation of the head.

The subject of the invention is shown in an exemplary embodiment in the drawing, in which fig. 1 shows a fragment of the chromatographic column with the upper head in the longitudinal section, fig. 2 shows the plate of the mobile phase distributor with 18 holes in the top view, and fig. 3 shows the plate of the mobile phase distributor with 54 holes also in the top view.

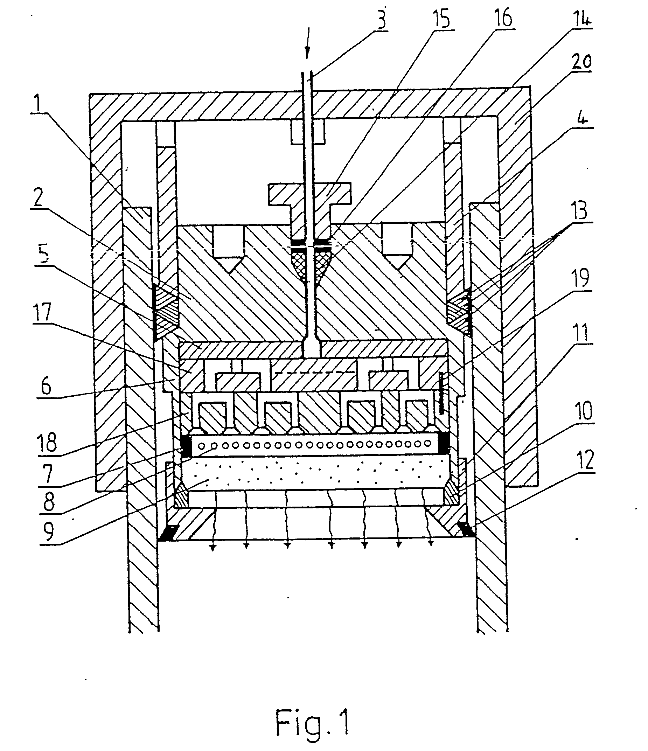

As shown in Fig. 1, the chromatographic column with a diameter of 100 mm is provided with a cylindrical body 1 in which there is a head 2. The head 2 is provided with a central conduit 3 for supplying the mobile phase, situated on the axis of symmetry of the column, and with a threaded sleeve 4 mounted on the outer surface of the body of the head 2. In the body of the head 2 there are mounted in succession: a tephlon spacer® 5, a mobile phase distributor 6, and a steel ring 7 inside which a net 8 of acid-resistant steel is mounted. Below the net 8 there is a filter plate 9 of porous sinter, abutting the face of the ring 7. The filter plate 9 is sealed in the body of the head 2 with a tephlon gasket® 10 in a form of a ring, which is held down to the head 2 and the filter plate 9 by a hold-down nut 11. The hold-down nut 11 has a machined circumferential groove in which there is a tephlon® scraper ring 12 serving for cleaning the inner surface of the body 1 of the column during installation of the head 2. Between the protrusion of the outer surface of the body of the head 2 and the face of the threaded sleeve 4 three tephlon® gaskets 13 are disposed. The central conduit 3 is sealed in the body of the head 2 by means of a gasket 14 pressed down by a throttle screw 15 through a steel sleeve 16. The mobile phase distributor 6 comprises two plates 17 and 18 of acid-resistant steel, whose mutual position and the position in relation to the body of the head 2 is set by a pin 19. Both plates 17 and 18 are provided with holes and grooves. Outlets of holes in the plate 17 are situated in a strictly determined position in relation to grooves made in the upper surface of the plate 18 due to the application of the pin 19 situated in the vicinity of the outer surface of plates 17 and 18. Due to such an arrangement of plates 17 and 18 and due to the fact that the outlet of the central conduit 3 is situated above the distributor 6 a cascade flow of the mobile phase is achieved. The lower head 2 is designed in a similar way, both heads 2 being attached to the body 1 of the column in a slidable manner by means of nuts 20, with which it is possible to press down both heads 2 to the packing of the column.

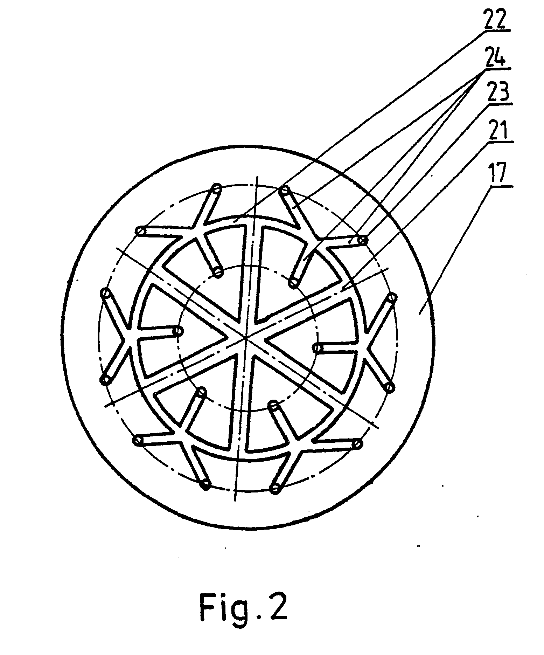

As shown in Fig. 2, the plate 17 of the distributor 6 is provided with six grooves 21 branching out radially at an angle of 60° from the centre thereof and reaching a common collector 22 in a form of a groove shaped as a circle of a radius equal to 3/5 of the radius of the plate 17.

In the plate 17 eighteen ports 23 are disposed, whereof six are situated between radial groves 21 and the collector 22 at the same distance from each other, whereas the other twelve ports 23 are situated outside the collector 22. Each of six ports 23 disposed between radial grooves 21 and every two ports 23 disposed outside the collector 22 are connected by grooves 24 with the collector 22 in a common point which is situated at half the distance between radial grooves 21. Grooves 24 have the same length being 1/4 of the length of the radius of the plate 17 and branch out from the common point at an angle of 120° in relation to each other.

Plate 17 is made of acid-resistant steel and has a circular shape.

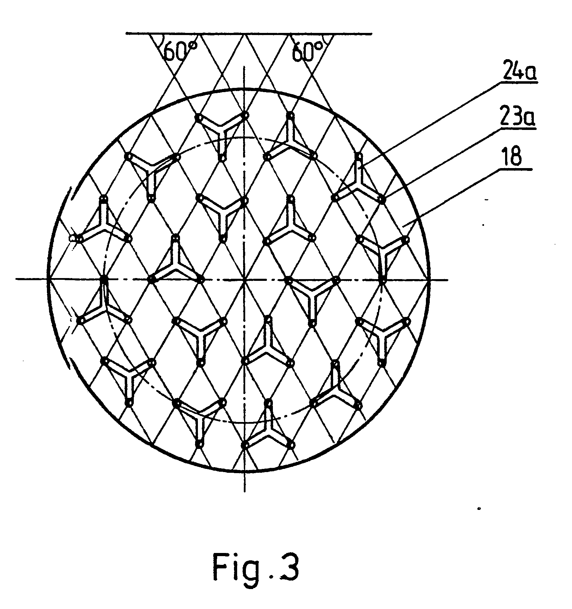

As shown in Fig. 3, the plate 18 of the distributor 6 has 54 ports 23a arranged on nodes of a rhomboidal lattice in which the acute angle is of the order of 60°. Ports 23a are coupled in threes by grooves 24a in common points which are situated on two circles so that six common points arranged on the inner circle are in line with ports 23 situated in the plate 17 between radial grooves 21, whereas the other twelve common points arranged on the outer circle of the plate 18 are in line with ports 23 situated outside the collector 22 in the plate 17.

As in the plate 17 grooves 24a have the same length being 0.15 of the length of the radius of the plate 18 and branch out from common points at an angle of 120° in relation to each other.

After assembling both heads 2 inside the body 1 of the column the lower head 2 is installed. Its tightness in relation to the body 1 of the column is achieved by compressing gasket 13 by screwing in the threaded sleeve 4 while simultaneously immobilizing the lower head 2 body. Final location of the lower head 2 is effected after screwing in the nut 20 on the outer surface of the body 1 of the column so far as at least the inner surface abuts the outer surface of the sleeve 4.

Next, the column is filled with a corresponding absorbent so that the upper surface of the packing is near the outlet of the column, however, lower than the distance from the outer surface of the porous sinter 9 to the outer edge of the upper gasket 13. The upper head 2 is introduced so far into the column thus filled that all gaskets 13 are located inside the body 1 of the column. In this position gaskets 13 are compressed by screwing in the threaded sleeve 4 along the surface of the body of the head 2 till it is fixed in the body 1 of the column. Next, the head 2 together with the sleeve 4 is shifted along the body 1 of the column towards the packing by tightening the nut 20 for so far that the head 2 visibly abuts with the whole outer surface of the porous sinter 9 the upper surface of the packing.

The column thus prepared is placed in the circuit of a liquid—or gas chromatograph, whereby the outlet of the central conduit 3 of the lower head 2 is connected to a detector and a collector of fractions of the chromatograph, and the inlet of the conduit 3 of the upper head 2—with a device proportioning a mixture of substances to be separated and a pump forcing the eluate. Separation of substances is effected according to known methods by the method of liquid—or gas chromatography. For instance, in such a way that onto the upper surface of the packing a narrow zone is proportioned being the solution of a mixture of substances being separated in a corresponding solvent and then components of the said mixture are eluated in succession from the column to a detector and a collector of fractions with a liquid of correspondingly selected composition, that is, the so-called eluent.

**Claims**

1. Column for liquid chromotography, including a cylindrical body (1) and heads (2) movably mounted on the inlet and the outlet of the column; each head (2) including a filter plate (9) of porous sinter mounted therein and having a protrusion on the outer surface thereof, at least one gasket (13) being disposed between said protrusion and a sleeve (4) provided over the outer surface of the head (2); and a central conduit (3) located in each head (2) adjacent to said filter plate (9) and forming the inlet or outlet of said column, characterized in that a spacer (5), a mobile phase distributor (6) and a ring (7) with a net (8) disposed therein, are mounted in succession in each of the heads (2) between one end of the central conduit (3) and the filter plate (9) of porous sinter, said filter plate (9) abutting the face of the ring (7) and sealed in the head (2) by a gasket (10), said gasket (10) being pressed to the head (2) and the filter plate (9) by a hold-down nut (11), and each of the heads (2) is adjusted slidably with respect to the body (1) of the column by means of a nut (20).

2. Column according to claim 1, characterized in that said distributor (6) of the mobile phase is in a form of a plate (17) provided with radial grooves (21) branching out at an angle of 60° from the centre thereof and reaching a common collector (22) in a form of a groove and with eighteen ports (23) whereof six are disposed between radial grooves (21) and the collector (22) at the same distance from one another, whereas the other twelve ports (23) are situated outside the collector (22) whereas each of the ports (23) situated between radial grooves (21) and each two ports (23) situated outside the collector (22) being connected by grooves (24) of the same length with the collector (22) in a common point which is situated at half the distance between radial grooves (21).

3. Column according to claim 2, characterized in that between the plate (17) and the ring (7) with the net (8) there is a plate (18) having 54 ports (23a) arranged in nodes of a rhomboidal lattice of the acute angle of the order of 60°, which are coupled by three by means of grooves (24a) of the same length in common points situated on two circles, plate (18) being so disposed in relation to the plate (17) that six common points arranged on the inner circle are in line with ports (23) situated between grooves (21) in the plate (17), whereas the other common points arranged on the outer circle of the plate (18) are in line with ports (23) situated outside the collector (22) in the plate (17).

4. Column according to claim 1, characterized in that the hold-down nut (11) has a circumferential groove enclosing a scraper ring (12).

## Patentansprüche

1. Säule für Flüssigkeits-Chromotographie mit einem zylindrischen Körper (1) und bewegbar auf dem Einlaß und Auslaß der Säule angeordneten Köpfen (2), wobei jeder Kopf (2) eine in ihm montierte Filterplatte (9) aus porösem Sinter und einen Vorsprung auf seiner äußeren Oberfläche aufweist, wobei wenigstens eine Dichtung (13) zwischen dem Vorsprung und einer über der äußeren Oberfläche des Kopfes (2) vorgesehenen Hülse (4) angeordnet ist; und einer zentralen, sich in jedem Kopf (2) angrenzend an die Filterplatte (9) befindlichen und den Einlaß oder Auslaß der Säule bildenden Leitung (3), dadurch gekennzeichnet, daß ein Abstandstück (5), ein Verteiler (6) mit beweglicher Phase und ein Ring (7) mit einem in diesem angeordneten Netz (8) in Aufeinanderfolge in jedem der Köpfe (2) zwischen einem Ende der zentralen Leitung (3) und der Filterplatte (9) aus porösem Sinter angeordnet sind, wobei die Filterplatte (9) an die Stirnfläche des Rings (7) anstößt und in dem Kopf (2) durch eine Dichtung (10) abgedichtet ist, die durch eine Druckmutter (11) an den Kopf (2) und an die Filterplatte (9) angedrückt ist und daß jeder der Köpfe (2) in Bezug auf den Körper (1) der Säule mittels einer Mutter (20) verschiebbar eingestellt ist.

2. Säule nach Anspruch 1, dadurch gekennzeichnet, daß der Verteiler (6) mit beweglicher Phase die Form einer mit radialen Nuten (21) versehenen Platte (17) aufweist, die unter einem Winkel von 60° von ihrer Mitte ausgehen und einen gemeinsamen Sammler (22) in der Form einer Nut erreichen, sowie mit achtzehn Durchgangsöffnungen (23), von welchen sechs sich zwischen den Nuten (21) und dem Sammler (22) im gleichen Abstand voneinander angeordnet sind, während die anderen zwölf Öffnungen (23) sich außerhalb des Sammlers (22) befinden, wobei jede zwischen radialen Nuten (21) befindliche Öffnung (23) und die jeweils zwei außerhalb des Sammlers (22) befindlichen Öffnungen (23) durch gleich lange Nuten (24) mit dem Sammler (22) an eine gemeinsame Stelle verbunden sind, die sich in der Mitte des Abstandes zwischen radialen Nuten (21) befindet.

3. Säule nach Anspruch 2, dadurch gekennzeichnet, daß sich zwischen der Platte (17) und dem Ring (7) mit dem Netz (8) eine Platte (18) mit 54 Öffnungen (23a) befindet, die in den Knotenpunkten des romboiden Netzes mit einem spitzen Winkel von ca. 60° angeordnet sind, die je drei durch gleich lange Nuten (24a) an gemeinsamen auf zwei Kreisen angeordneten Punkten miteinander gekoppelt sind, wobei die Platte (18) in Bezug auf die Platte (17) derart angeordnet ist, daß sechs gemeinsame, auf dem inneren Kreis angeordnete Punkte mit Nuten (21) in der Platte (17) befindlichen Öffnungen (23) in einer Reihe liegen, während die anderen gemeinsamen, auf dem äußeren Kreis der Platte (18) angeordneten Punkte mit außerhalb des Sammlers (22) in der Platte (17) befindlichen Öffnungen (23) in einer Reihe liegen.

4. Säule nach Anspruch 1, dadurch gekennzeichnet, daß die Druckmutter (11) eine Umfangsnut aufweist, die einen Abstreifring (12) umfaßt.

## Revendications

1. Colonne de chromatographie liquide comprenant un corps cylindrique (1) et des têtes (2) mobiles montées à l'entrée et à la sortie de la colonne; chaque tête (2) comprenant une plaque filtrante (9) en aggloméré fritté poreux monté à l'intérieur et présentant une saillie sur sa surface extérieure, au moins un joint (13) étant disposé entre ladite saillie et un manchon prévu sur la surface extérieure de la tête (2); et une conduite centrale (3) constituée dans chaque tête (2), adjacente à ladite plaque filtrante (9) et formant l'entrée ou la sortie de ladite colonne; caractérisée en ce qu'un élément d'écartement (5), un distributeur de phase mobile (6) et un anneau (7) comportant un réseau à mailles (8) disposé à l'intérieur sont montés en succession dans chaque tête (2) entre une extrémité de la conduite centrale (3) et la plaque filtrante (9) en aggloméré fritté poreux, ladite plaque filtrante (9) venant buter contre la face de l'anneau (7) et étant scellée dans la tête (2) par un joint (10), ledit joint (10) étant pressé contre la tête (2) et contre la plaque filtrante (9) par un écrou de retenue (11), et chacune des têtes (2) est ajustée de façon coulissante par rapport au corps (1) de la colonne au moyen d'un écrou (20).

2. Colonne selon la revendication 1, caractérisée en ce que ledit distributeur (6) de la phase mobile a la forme d'une plaque (17) munie de gorges radiales (21) partant en formant entre elles un angle de 60° à partir de son centre et atteignant un collecteur commun (22) ayant la forme d'une gorge et comprenant dix-huit ouvertures (23), dont six sont disposées entre les gorges radiales (21) et le collecteur (22) à la même distance les unes des autres alors que les autres douze ouvertures (23) sont situées à l'extérieur du collecteur (22), chacune des ouvertures (23) situées entre les gorges radiales (21) et les deux ouvertures associées (23) situées à l'extérieur du collecteur (22) étant reliées par des gorges (24) de même longueur au collecteur (22) en un point commun situé à mi-distance entre gorges radiales (21).

3. Colonne selon la revendication 2, caractérisée en ce qu'entre la plaque (17) et l'anneau (7) comprenant le réseau à mailles (8) est prévue une plaque (18) comprenant 54 ouvertures (23a) disposées au niveau de noeuds d'un treillis rhomboïde dont l'angle aigu est de 60°, qui sont accouplées par trois au moyen de gorges (24a) de même longueur en des points communs situés sur les deux cercles, la plaque (18) étant disposée par rapport à la plaque (17) de manière que six points communs disposés sur le cercle intérieur soient en ligne avec les ouvertures (23) situées entre les gorges (21) de la plaque (17), alors que les autres points communs disposés sur le cercle extérieur de la plaque (18) sont en ligne avec les ouvertures (23) situées à l'extérieur du collecteur (22) de la plaque (17).

4. Colonne selon la revendication 1, caractérisée en ce que l'écrou de retenue (11) comporte une gorge circonférentielle dans laquelle est monté un anneau racleur (12).

Fig.1

Fig. 2

2

Fig.3